# EUROPEAN PATENT APPLICATION

(11) **EP 1 426 853 A2**
(43) Date of publication of application: **09.06.2004**
(21) Application number: 03027721.4
(22) Date of filing: 02.12.2003
(51) Int. Cl.: G06F 3/00

(54) **Force-applying input device**

(30) Priority: 03.12.2002 JP 2002351279
(71) Applicant: ALPS ELECTRIC CO., LTD., Tokyo 145-8501 (JP)
(72) Inventor: Onodera, Mikio, Ota-ku Tokyo 145-8501 (JP); Nagaoka, Shuichi, Ota-ku Tokyo 145-8501 (JP)
(74) Representative: Klunker . Schmitt-Nilson . Hirsch

(57) **Abstract**

A force-applying input device includes a mechanical section including a tilting shaft, an operation section mounted to an end of the tilting shaft, first to fourth pressure sensors disposed between the tilting shaft and the operation section, first and second direct-current motors for applying a force to the operation section, first and second position sensors for detecting the direction and amount of rotation of the first and second direct-current motors, and a controller. The first to fourth pressure sensors detect a torque ripple of the first and second direct-current motors in order for the controller to output a correction signal for eliminating the torque ripple.

## Description

### BACKGROUND OF THE INVENTION

### 1. Field of the Invention

The present invention relates to a force-applying input device for applying a force to an operation section according to its operation state. More particularly, the present invention relates to means for controlling an actuator for applying a force to the operation section.

### 2. Description of the Related Art

Hitherto, a force-applying input device comprising an operation section, a position sensor, an actuator, and a controller has been proposed as, for example, a centralized control device of a vehicle-installed electrical device. An operator operates the operation section. The position sensor detects the state of operation of the operation section. The actuator applies a force to the operation section. The controller controls a driving operation of the actuator in accordance with a position signal output from the position sensor in order to apply a force to the operation section according to its state of operation. (Refer to, for example, Japanese Unexamined Patent Application Publication No. 2002-149324 (Fig. 3).)

Since the force-applying input device can apply various forces to the operation section according to, for example, the amount and direction of the operation of the operation section, it is possible to inform the operator of the type of operation of the operation section by a blind touch, so that the operator can sensibly know, for example, whether or not he or she has operated the operation section by a predetermined amount in a predetermined direction. Therefore, it is possible to prevent the operator from improperly operating the operation section, thereby making it easier to carry out a predetermined function selection and a predetermined function adjustment for a plurality of vehicle-installed electrical devices by operating one operation section.

In order to reduce costs of the force-applying input device, it is desirable to use a direct current (DC) motor as an actuator for applying a force to the operation section because the DC motor is low in cost.

However, when a DC motor is driven at an electric current near a rated electric current, the force applied to the operation section is adversely affected by a very small change in torque, that is, by what is called a torque ripple. Therefore, when a DC motor is used as an actuator for applying a force to the operation section, it is necessary to use a large DC motor which can generate a predetermined force at a drive current that is considerably less than the rated electric current. As a result, size, weight, and cost of the force-applying input device are increased. Since a large heavy DC motor is used, a large vibration tends to be generated in a system including the actuator and the operation section. Consequently, it is difficult to transmit various forces to the operation section precisely.

### SUMMARY OF THE INVENTION

Accordingly, in order to overcome such problems, it is an object of the present invention to provide a small low-cost force-applying input device which makes it possible to transmit various forces to an operation section precisely.

To this end, according to the present invention, there is provided a force-applying input device comprising an operation section operated by an operator, a position sensor for detecting a state of operation of the operation section, a pressure sensor for detecting pressure acting upon the operation section, a direct-current motor for applying a force to the operation section, and a controller for controlling a driving operation of the direct-current motor according to a position signal output from the position sensor in order to apply the force to the operation section according to the state of operation, and for controlling a value of an electric current supplied to the direct-current motor according to a pressure signal output from the pressure sensor in order to smooth a drive torque of the direct-current motor.

In this way, when the force-applying input device comprises a controller which not only controls the driving operation of the DC motor according to the position signal output from the position sensor in order to apply the force to the operation section according to its state of operation, but also controls the value of the electric current supplied to the DC motor according to the pressure signal output from the pressure sensor in order to smooth the drive torque of the DC motor, a torque ripple occurring when the DC motor is driven at an electric current near a rated electric current can be reduced or eliminated by controlling the value of the electric current supplied to the DC motor. Therefore, it is possible to use a small light DC motor as an actuator for applying various forces to the operation section.
Consequently, it is possible to reduce the size, weight, cost, and power consumption of the force-applying input device, and damage to the force-applying input device caused by vibration.

Although not exclusive, the pressure sensor may be a combination of a pressure sensitive conductive rubber and electrode plates.

In this way, when the pressure sensor is a combination of a pressure sensitive conductive rubber and electrode plates, the drive torque of the DC motor can be corrected based on the amount of change in output from the pressure sensor. Therefore, it is not necessary to correct a zero-point of the pressure sensor. Consequently, it is possible to easily assemble the pressure sensor with respect to the force-applying input device, and to eliminate maintenance that is carried out as the pressure sensor deteriorates with the passage of time.

### BRIEF DESCRIPTION OF THE DRAWINGS

Fig. 1 illustrates the structure of a force-applying input device of an embodiment of the present invention;
Fig. 2 is a sectional side view of a mechanical section of the force-applying input device of the embodiment of the present invention;
Fig. 3 is a sectional plan view of the mechanical section of the force-applying input device of the embodiment of the present invention;
Fig. 4 is a sectional view showing the structure and the arrangement of pressure sensors of the force-applying input device of the embodiment of the present invention;
Fig. 5 is a graph illustrating a torque ripple of DC motors of the force-applying input device of the embodiment of the present invention and a correction signal of the torque ripple;
Fig. 6 illustrates the structure of a correction control section of the force-applying input device of the embodiment of the present invention; and
Fig. 7 is a flowchart of the procedure for operating the force-applying input device of the embodiment of the present invention.

### DESCRIPTION OF THE PREFERRED EMBODIMENT

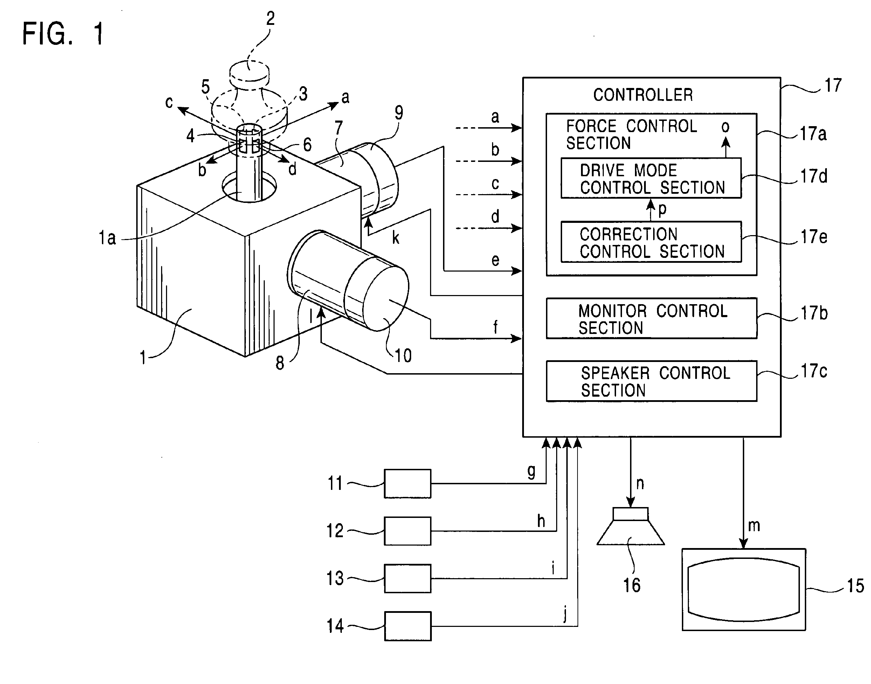

Hereunder, a force-applying input device of an embodiment of the present invention will be described with reference to Figs. 1 to 6.

As shown in Fig. 1, the force-applying input device of the embodiment primarily comprises a mechanical section 1, an operation section 2, first to fourth pressure sensors 3 to 6, first and second DC motors 7 and 8, first and second position sensors 9 and 10, first to fourth switches 11 to 14, a monitor 15, a speaker 16, and a controller 17. The mechanical section 1 comprises a tilting shaft (lever) 1a. The operation section 2 is mounted to an end of the tilting shaft 1a. The first to fourth pressure sensors 3 to 6 are disposed between the tilting shaft 1a and the operation section 2. The first and second DC motors 7 and 8 apply a force to the operation section 2 through the tilting lever 1a and the first to fourth pressure sensors 3 to 6. The first and second position sensors 9 and 10 detect the amount and direction of rotation of the first and second DC motors 7 and 8. The controller 17 controls the first and second DC motors 7 and 8, the monitor 15, and the speaker 16 by receiving pressure signals a, b, c, and d output from the respective pressure sensors 3, 4, 5, and 6, first and second position signals e and f output from the respective first and second position sensors 9 and 10, and first to fourth switch signals g, h, i, and j output from the respective first to fourth switches 11, 12, 13, and 14.

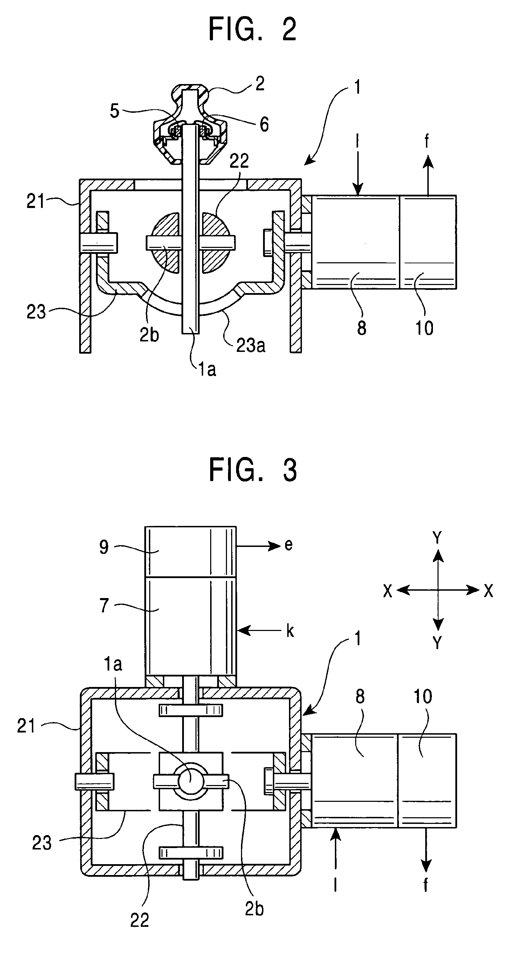

As shown in Figs. 1 to 3, the mechanical section 1 comprises the tilting lever 1a, a case 21, a lever holding shaft 22, and a swing arm 23. The lever holding shaft 22 and the swing arm 23 are rotatably held by the case 21, and are disposed perpendicular to each other. The tilting lever 1a is mounted to the lever holding shaft 22 so as to be rotatable only in the directions of rotation of the swing arm 23. In Figs. 2 and 3, reference numeral 2b denotes a central shaft for tilting the tilting lever 1a. The swing arm 23 has a long groove 23a through which the lower end portion of the tilting lever 1a passes. The width of the long groove 23a is slightly larger than the diameter of the lower end portion of the tilting lever 1a. When the tilting lever 1a is tilted in a tilting direction (either of directions X-X) as the lever holding shaft 22 rotates, the lower end portion of the tilting lever 1a can freely slide in the long groove 23a. In contrast, when the tilting lever 1a tilts in a tilting direction (either of directions Y-Y) as the central shaft 2b rotates, the swing arm 23 tilts together with the tilting lever 1a.

By virtue of such a structure, the tilting lever 1a can be tilted in any direction with the lever holding shaft 22 and the rotary central shaft 2b serving as centers. The lever holding shaft 22 is rotated in the tilting direction of the tilting lever 1a by an amount that is proportional to the tilting amount of the tilting lever 1a in either of the directions X-X. The swing arm 23 is rotated in the tilting directions of the tilting lever 1a by an amount that is proportional to the tilting amount of the tilting lever 1a in either of the directions Y-Y.

The operation section 2 is formed with a shape and a size that allow an operator to operate the operation section 2.

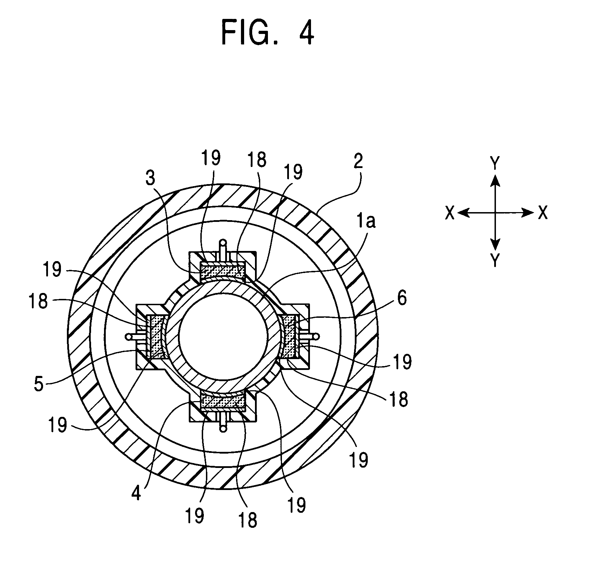

As shown in Fig. 4, the pressure sensors 3 to 6 each comprise a pressure sensitive conductive rubber 18 and electrode plates 19 attached to the front and back surfaces of the pressure sensitive conductive rubber 18. The pressure sensors 3 to 6 are disposed between the tilting lever 1a and the operation section 2 in the directions X-X and the directions Y-Y.

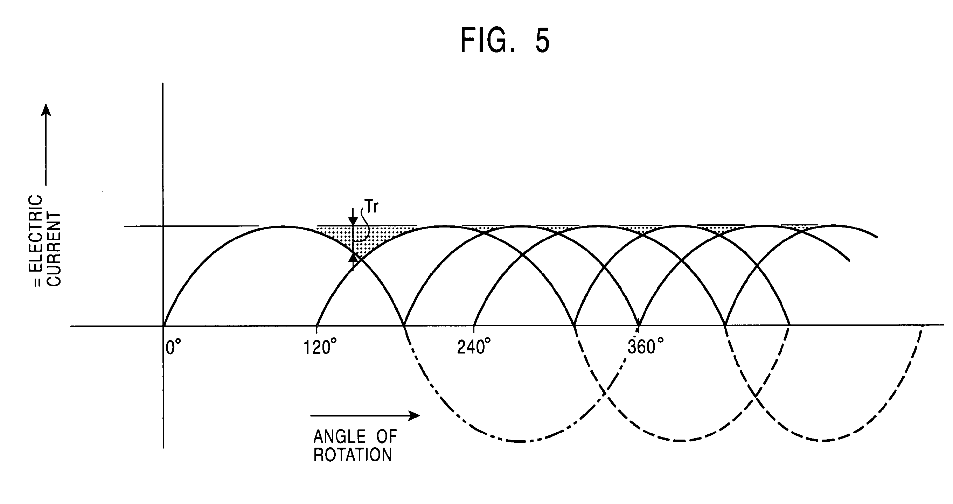

The first DC motor 7 is connected to the lever holding shaft 22, and the second DC motor 8 is connected to the swing arm 23. When the first DC motor 7 and the second DC motor 8 are driven at a rated electric current, as shown in Fig. 5, a very small torque variation Tr, or what is called a torque ripple, occurs.

The first and second position sensors 9 and 10 detect the amount and direction of rotation of the rotary shafts of the first and second DC motors 7 and 8, convert the detection results into electrical signals corresponding to the detection results, and output the electrical signals. The first and second position sensors 9 and 10 may be, for example, rotary encoders or rotary variable resistors. The rotary shaft of the first position sensor 9 is connected to the lever holding shaft 22, and the rotary shaft of the second position sensor 10 is connected to the swing arm 23.

The first to fourth switches 11 to 14 are used as selecting switches in a vehicle-mounted electrical device when the force-applying input device of the embodiment is used as a centralized control device of the vehicle-installed electrical device. Therefore, it is possible to reduce the number of switches according to the number of vehicle-mounted electrical devices that are controlled centrally. When the force-applying input device of the embodiment is used for other purposes, the switches 11 to 14 may be omitted.

When the operation section 2 is being operated, that is, when the force-applying input device of the embodiment is used as a centralized control device of a vehicle-mounted electrical device, the monitor 15 visually informs a user of, for example, the type of electrical device that is selected by any one of the first to fourth switches 11 to 14, a function switched by operating the operation section 2, and the state of adjustment of the function, the adjustment being carried out by operating the operation section 2. The monitor 15 may be omitted depending upon the purpose of use of the force-applying input device of the embodiment.

When the operation section 2 is being operated, that is, when the force-applying input device of the embodiment is used as a centralized control device of a vehicle-mounted electrical device, the speaker 16 informs the user, by sound or voice, of, for example, the type of electrical device that is selected by any one of the first to fourth switches 11 to 14, a function switched by operating the operation section 2, and the state of adjustment of the function, the adjustment being carried out by operating the operation section 2. The speaker 16 may be omitted depending upon the purpose of use of the force-applying input device of the embodiment.

As shown in Fig. 1, the controller 17 comprises a force control section 17a, a monitor control section 17b, and a speaker control section 17c. Based on the pressure signals a, b, c, and d output from the respective pressure sensors 3, 4, 5, and 6, the first and second position signals e and f output from the respective first and second position sensors 9 and 10, and the first to fourth switch signals g, h, i, and j output from the respective first to fourth switches 11, 12, 13, and 14, the force control section 17a generates predetermined force signals k and 1 according to the amount and direction of operation of the tilting shaft 1a (that is, the operation section 2), and outputs the predetermined force signals k and 1. The monitor control section 17b generates a monitor control signal m based on the signals a to 1 and outputs the monitor control signal m. The speaker control section 17c generates a speaker control signal n based on the signals a to 1 and outputs the speaker control signal n. The force control section 17a comprises a drive mode control section 17d and a correction control section 17e. Based on the position signals e and f and the switch signals g, h, i, and j, the drive mode control section 17d generates a drive mode signal o of the first and second DC motors 7 and 8 and outputs the drive mode signal o. Based on the pressure signals a, b, c, and d, the correction control section 17e generates a correction signal p for eliminating the torque ripple Tr of the first and second DC motors 7 and 8 and outputs the correction signal p.

The drive mode control section 17d, the monitor control section 17b, and the speaker control section 17c may be constructed by using the technology previously proposed by the applicant and disclosed in the aforementioned Japanese Unexamined Patent Application Publication No. 2002-149324. In the document, a system for controlling an actuator, a manual operation section 3, pushbutton switches 4a to 4f and 5a to 5c, an actuator 14, an encoder 25, and an indicator device D correspond to the drive mode control section 17d, the operation section 2, the first to fourth switches 11 to 14, the first and second DC motors 7 and 8, the first and second position sensors 9 and 10, and the monitor 15 or the speaker 16, respectively.

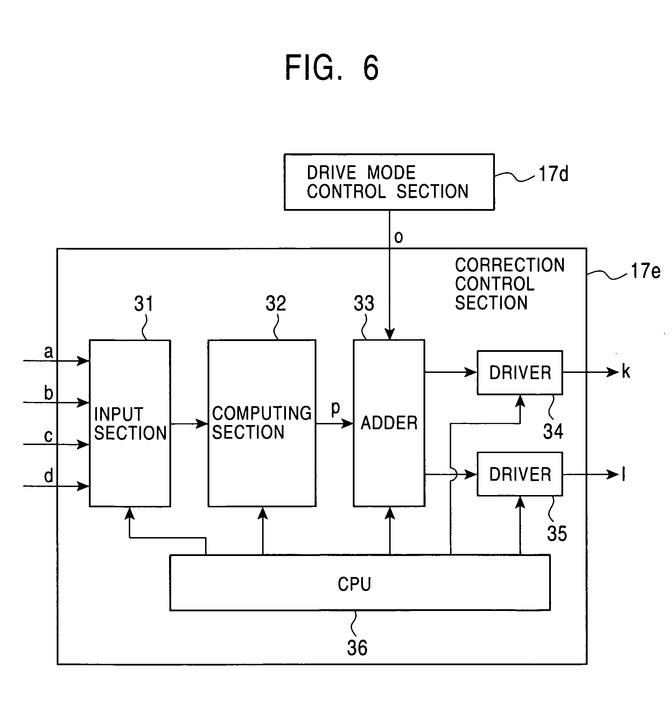

As shown in Fig. 6, the correction control section 17e comprises an input section 31, a computing section 32, an adder 33, driver circuits 34 and 35, and a central processing unit (CPU) 36. The pressure signals a, b, c, and d, which are output from the pressure sensors 3 to 6, are input to the input section 31. The computing section 32 computes the magnitude and direction of the torque ripple Tr, which is generated at the first and second DC motors 7 and 8, by the input pressure signals a, b, c, and d. The computing section 32 also computes a correction value of a drive current of the DC motors 7 and 8 required for generating a torque that is of the same magnitude as and in a direction opposite to the calculated torque ripple Tr in order to output a correction signal p corresponding to the correction value. The adder 33 adds the correction signal p to the drive mode signal o, which is output from the drive mode control section 17d, of the DC motors 7 and 8. The driver circuits 34 and 35 drive the DC motors 7 and 8 according to the output signal from the adder 33. The CPU 36 controls all of these parts.

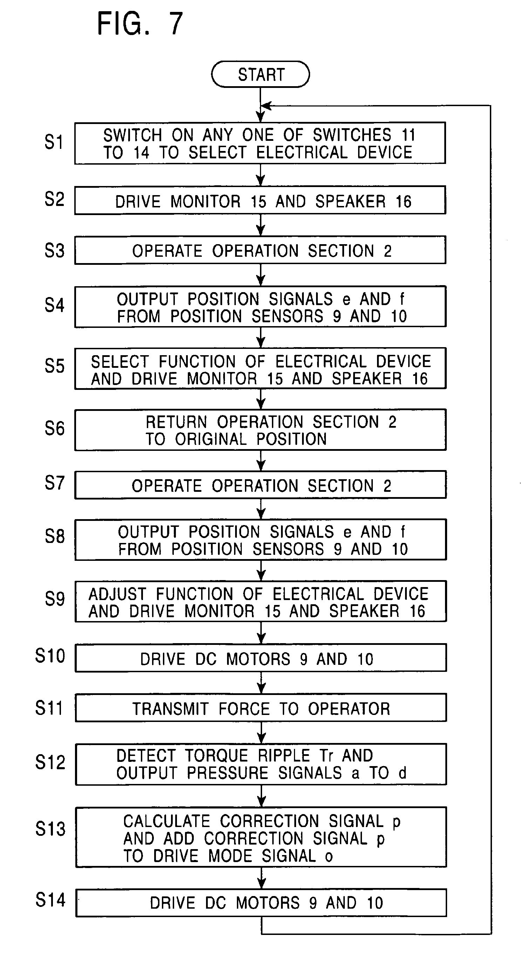

Hereunder, the procedure for operating the force-applying input device of the embodiment will be described with reference to the flowchart of Fig. 7 by taking as an example the case in which the force-applying input device is used as a centralized control device of a vehicle-installed electrical device.

When the operator presses any one of the first to fourth switches 11 to 14, the pressed switch outputs a switch signal in order to select an electrical device in correspondence with the switch signal (Step S1). When the controller 17 receives the switch signal output from the pressed switch, it displays the selected electrical device on the monitor 15 and informs the operator of the name of the selected electrical device through the speaker 16 (Step S2). When, from this state, the operator operates the operation section 2 (Step S3), the first and second position sensors 9 and 10 output respective signals e and f according to the tilting direction and tilting amount of the operation section 2 (Step S4). When the drive mode control section 17d receives the position signals e and f, it selects a function of the electrical device according to the tilting position of the operation section 2 and displays the selected function on the monitor 15 and informs the operator of the selected function through the speaker 16 (Step S5). When the operator returns the operation section 2 to its original position (Step S6) and operates the operation section 2 again (Step S7), the first and second position sensors 9 and 10 similarly output respective position signals e and f according to the tilting amount and tilting direction of the operation section 2 (Step S8). When the drive mode control section 17d receives the position signals e and f, it adjusts the function of the electrical device according to the tilting position of the operation section 2 and displays the state of adjustment of the function on the monitor 15 and notifies the operator of the state of adjustment through the speaker 16 (Step S9). Next, when, based on the position signals e and f output from the respective first and second position sensors 9 and 10, the drive mode control section 17d generates a drive mode signal o of the first and second DC motors 7 and 8 and outputs the drive mode signal o to the first and second DC motors 7 and 8 through the driver circuits 34 and 35, it drives the first and second DC motors 7 and 8 (Step S10). A specific method of carrying out Step S10 is disclosed in detail in the aforementioned Japanese Unexamined Patent Application Publication No. 2002-149324. By this, the operation section 2 is driven by the first and second DC motors 7 and 8, so that external forces from the first and second DC motors 7 and 8 are transmitted to the operator through the tilting lever 1a, the first to fourth pressure sensors 3 to 6, and the operation section 2 (Step S11). At this time, the first to fourth pressure sensors 3 to 6 detect a torque ripple Tr of the DC motors 7 and 8 and output pressure signals a, b, c, and d (Step S12). When the correction control section 17e receives the pressure signals a, b, c, and d, it generates a correction signal p in order for the adder 33 to add the correction signal p and the drive mode signal o (Step S13). Based on the resulting drive mode signal o that has been corrected by the correction signal p, the driver circuits 34 and 35 drive the first and second DC motors 7 and 8 (Step S14). Thereafter, the Steps S1 to S14 are repeated.

Accordingly, since the force-applying input device of the embodiment comprises a controller 17 which not only controls the driving operation of the DC motors 7 and 8 according to the position signals e and f output from the position sensors 9 and 10 in order to apply a force to the operation section 2 according to its state of operation, but also controls the value of an electric current supplied to the DC motors 7 and 8 according to the pressure signals a, b, c, and d output from the respective pressure sensors 3, 4, 5, and 6 in order to smooth the drive torque of the DC motors 7 and 8, a torque ripple Tr that is generated when the DC motors 7 and 8 are driven at an electric current near a rated electric current can be reduced or eliminated by controlling the value of the electric current supplied to the DC motors 7 and 8. Therefore, it is possible to use small light DC motors as actuators for applying various forces to the operation section. Consequently, it is possible to reduce the size, weight, cost, and power consumption of the force-applying input device, and damage to the force-applying input device caused by vibration.

In this way, when the pressure sensors 3 to 6 are each a combination of a pressure sensitive conductive rubber 18 and electrode plates 19, the drive torque of the DC motors 7 and 8 can be corrected based on the amounts of change in outputs from the pressure sensors 3 to 6. Therefore, it is not necessary to correct a zero-point of each pressure sensor. Consequently, it is possible to easily assemble the pressure sensors 3 to 6 with respect to the force-applying input device, and to eliminate maintenance that is carried out as the pressure sensors 3 to 6 deteriorate with the passage of time.

Although, in the embodiment, the two DC motors 7 and 8 and the two position sensors 9 and 10 are disposed perpendicular to each other, the number and arrangement of DC motors and position sensors are not limited thereto, so that any number of DC motors and position sensors may be disposed in any arrangement as required.

## Claims

1. A force-applying input device comprising:
an operation section operated by an operator;
a position sensor for detecting a state of operation of the operation section;
a pressure sensor for detecting pressure acting upon the operation section;
a direct-current motor for applying a force to the operation section; and
a controller for controlling a driving operation of the direct-current motor according to a position signal output from the position sensor in order to apply the force to the operation section according to the state of operation, and for controlling a value of an electric current supplied to the direct-current motor according to a pressure signal output from the pressure sensor in order to smooth a drive torque of the direct-current motor.

2. A force-applying input device according to Claim 1, wherein the pressure sensor is a combination of a pressure sensitive conductive rubber and electrode plates.
